(19) Europäisches Patentamt / European Patent Office / Office européen des brevets

(11) **EP 4 317 076 A1**

(12) **EUROPEAN PATENT APPLICATION**
published in accordance with Art. 153(4) EPC

(43) Date of publication:
**07.02.2024 Bulletin 2024/06**

(21) Application number: **22779864.2**

(22) Date of filing: **08.03.2022**

(51) International Patent Classification (IPC):
*C01G 49/00* (2006.01)    *C08K 3/20* (2006.01)
*C08L 101/00* (2006.01)   *H01F 1/36* (2006.01)
*H01F 1/37* (2006.01)

(52) Cooperative Patent Classification (CPC):
**C01G 49/00; C08K 3/20; C08L 101/00; H01F 1/36; H01F 1/37**

(86) International application number:
**PCT/JP2022/010101**

(87) International publication number:
**WO 2022/209640 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021062310**

(71) Applicant: **Powdertech Co., Ltd.
Kashiwa-shi, Chiba 277-8557 (JP)**

(72) Inventors:
• **KANEKO, Tatsuto
Kashiwa-shi, Chiba 277-8557 (JP)**
• **AGA, Koji
Kashiwa-shi, Chiba 277-8557 (JP)**

(74) Representative: **Vossius & Partner
Patentanwälte Rechtsanwälte mbB
Siebertstraße 3
81675 München (DE)**

(54) **FERRITE POWDER, FERRITE RESIN COMPOSITE MATERIAL, AND ELECTROMAGNETIC SHIELDING MATERIAL, ELECTRONIC MATERIAL, OR ELECTRONIC COMPONENT**

(57)     Provided are a ferrite powder that inhibits magnetic loss at frequencies lower than 100 MHz, and when applied to a composite material or a composite body, is capable of preventing particles from coming off without loss of moldability and filling properties, a ferrite resin composite material, and electromagnetic shielding material, electronic material, or electronic component. This ferrite powder is a Mn-Zn ferrite powder containing at least spherical or polyhedral ferrite particles having a spinel phase as a main phase. The ferrite particles also have, at respective surfaces thereof, a step structure having a convex polygonal contour. Furthermore, the BET specific surface area of the ferrite powder is 0.35-10.00 $m^2/g$, and the contained amount of the zinc oxide (ZnO) phase thereof is 0-0.8 mass%.

FIG. 1

SU8000 20.0kV 5.2mm x100k SE(U)                    500nm

EP 4 317 076 A1

**Description**

TECHNICAL FIELD

The present invention relates to a ferrite powder, a ferrite resin composite material, and an electromagnetic shielding material, an electronic material or an electronic component.

BACKGROUND ART

Composite materials composed of ferrite powder and resins have been widely used in various applications, including electromagnetic shielding materials. Such composite materials are produced by kneading of ferrite powder with resins. The composite materials are shaped into various composite products (i.e., shaped products) with different shapes, such as sheets. In the formation of the composite products, the particles, which constitute the ferrite powder, close to a spherical shape result in higher flowability in a forming process and a higher filling ratio of the ferrite powder in the composite products. Accordingly, such materials exhibit high formability and improved characteristics, such as electromagnetic shielding properties. From this point of view, ferrite powder (or ferrite particles) composed of spherical or polyhedral particles has been proposed.

For example, Patent Document 1 (PCT International Publication No. WO2017/212997) discloses substantially Zn-free monocrystalline ferrite particles having a mean particle size of 1 to 2000 nm with a spherical shape and containing 3 to 25 wt% Mn and 43 to 65 wt% Fe. This patent also discloses that the shaped product composed of such ferrite particles and binder resins exhibits the maximum value of the real part of the complex magnetic permeability ($\mu$') in a frequency band of 100 MHz to 1 GHz, and the use of such ferrite particles in the electromagnetic shielding material for electronic devices can lead to effective electromagnetic shielding properties in a broad frequency band regardless of frequency (Claim 1 and [0078] in Patent Document 1).

Patent Document 2 (Japanese Unexamined Patent Application, Publication No. 2016-60682) discloses a spherical ferrite powder having a volume average particle size of 10 to 50 um, the ferrite powder including ferrite particles with a particle size of less than 11 $\mu$m in an amount of 15 to 30 wt%. This patent also discloses that such a spherical ferrite powder exhibits high filling ability, high formability, superior handling ability, and high electric resistance in the use as filler materials, and that these advantages allow the shaped products made from the resin composition composed of such a spherical ferrite powder and resins to be used in various applications including IC sealants for electromagnetic wave absorption (Claim 1 and [0093] in Patent Document 2).

Patent Document 3 (International Publication No. 2018/061327) discloses Ni-Zn-Cu-based monocrystalline ferrite particles having a mean particle size of 1 to 2000 nm with a polyhedral shape and containing 5 to 10 wt% Ni, 15 to 30 wt% Zn, 1 to 5 wt% Cu, and 25 to 50 wt% Fe. This patent also discloses that such ferrite particles have both high saturation magnetization and high electric resistance, and are suitable for magnetic fillers or raw materials used in shaped products (Claim 1 and [0089] in Patent Document 3).

Patent Document 4 (Japanese Unexamined Patent Application, Publication No. 2006-160560) discloses spherical sintered ferrite particles having (a) a soluble ion content of 5 ppm or less, (b) a mean particle size of 10 to 50 $\mu$m and (c) a spinel structure identified through crystalline structural analysis by X-ray diffraction. This patent also discloses that a resin composition for a semiconductor sealant containing fillers composed of such spherical sintered ferrite particles and silica particles has low viscosity and high flowability and further exhibits high electromagnetic shielding properties, and that a semiconductor device including a sealing material containing such a resin composition has superior electromagnetic compatibility (EMC) (Claim 1 and [0023] in Patent Document 4).

Patent Document 5 (Japanese Unexamined Patent Application, Publication No. H04-304700) discloses a powder material for electromagnetic wave absorption composed of spherical Mn-Zn-based ferrite particles having a mean particle size of 50 to 150 $\mu$m. This patent also discloses that spheroidizing with a mean particle size of 150 $\mu$m or less causes enhanced flowability, resulting in a reduction in clogging of the gate during injection molding, which has been an obstacle to an increase in the particle size of the material (Claim 1 and [0008] in Patent Document 5).

In the use in different applications from composite materials, such as electromagnetic shielding material, Patent Document 6 (Japanese Patent No. 5921801) discloses a method for producing a carrier core material for an electrophotographic developer, the carrier core material having stepped irregularities which are an aggregation of raised portions concentrically spread on the surfaces of the particles and having a sphericity of 0.8 or more. This patent also discloses that the carrier core material is produced by granulating a mixture of $Fe_2O_3$ powder as raw material, carbonate as auxiliary raw material in a content of 10 to 50 g for 10 kg $Fe_2O_3$ powder, and a reducing agent, and then firing the mixture at a temperature of 1000°C or lower (Claim 1 and [0024] in Patent Document 6).

Patent Document 1: PCT International Publication No. WO2017/212997

Patent Document 2: Japanese Unexamined Patent Application, Publication No. 2016-60682
Patent Document 3: PCT International Publication No. WO2018/061327
Patent Document 4: Japanese Unexamined Patent Application, Publication No. 2006-160560
Patent Document 5: Japanese Unexamined Patent Application, Publication No. H04-304700
Patent Document 6: Japanese Patent No. 5921801

DISCLOSURE OF THE INVENTION

Problems to be Solved by the Invention

As described above, it has been proposed to improve the formability and the filling ability in composite materials or composite products through the use of spherical or polyhedral ferrite powder. Unfortunately, the study by the present inventors have revealed that the production of composite products with such ferrite powder and resin results in the issue of ready detachment of the ferrite particles from the composite products. In particular, a large number of ferrite particles were found to be detached during processing of the composite products (i.e., generation of a large number of detached particles). Such detachment of ferrite particles is not preferred because it causes a decrease in smoothness on the surface of the composite products.

In the study of the causes for the detachment of particles, the present inventors have speculated that spherical or polyhedral ferrite particles have poor adhesion to resins because of highly smooth surfaces. Further studies by the present inventors have revealed that, even in use of spherical or polyhedral ferrite particles, the adhesion to the resins can be improved by polygonal stepped features provided on the surfaces thereof, and the use of ferrite powder including such particles can lead to prevention of ferrite particles from detaching without impairing formability and filling ability, and the present inventors have completed the present invention from such findings.

Accordingly, it is an object of the present invention to provide a ferrite powder, a ferrite resin composite material, and an electromagnetic shielding material, an electronic material or an electronic component, the ferrite powder being capable of preventing the magnetic loss in a low frequency band less than 100 MHz, having higher magnetic permeability ($\mu$') than Mn-based ferrite containing Mn in the same level, and preventing the ferrite particles from detaching without impairing formability and filling ability when applied to composite materials or composite products.

Means for Solving the Problems

The present invention encompasses the following Aspects (1) to (10). In the present specification, "to" in the numerical expression includes the numerical values at both ends thereof. Namely, "X to Y" is synonymous with "X or more to Y or less".

Aspect (1): A Mn-Zn-based ferrite powder comprising at least spherical or polyhedral ferrite particles having a spinel phase as a main phase,
wherein the ferrite particles have a stepped feature with convex polygonal contours on the surfaces thereof, the ferrite powder has a BET specific surface area of 0.35 m$^2$/g to 10.00 m$^2$/g, and a content of a zinc oxide (ZnO) phase is 0% by mass to 0.8% by mass.
Aspect (2): The ferrite powder according to Aspect (1), wherein the ferrite powder has a composition of manganese (Mn)-zinc (Zn)-based ferrite with a manganese (Mn) content of 3.5% by mass to 20.0% by mass, a zinc (Zn) content of 1.0% by mass to 18.0% by mass, and an iron (Fe) content of 43.0% by mass to 65.0% by mass.
Aspect (3): The ferrite powder according to Aspect (1) or (2), wherein the stepped feature has two or more steps.
Aspect (4): The ferrite powder according to any one of Aspects (1) to (3), wherein the ferrite powder has a shape factor SF-1 of 100 to 110.
Aspect (5): The ferrite powder according to any one of Aspects (1) to (4), wherein the ferrite powder has sphere-like stepped particles in a percentage content (Ps) of 50% or more.
Aspect (6): The ferrite powder according to any one of Aspects (1) to (5), the spinel phase has a crystallite diameter of 1 nm to 100 nm.
Aspect (7): The ferrite powder according to any one of Aspects (1) to (6), the spinel phase has a lattice constant of 8.350 Å to 8.475 Å.
Aspect (8): The ferrite powder according to any one of Aspects (1) to (7), the ferrite powder has a 50% diameter (D50) of 0.10 $\mu$m to 20.00 $\mu$m in a volume distribution of particle sizes thereof.
Aspect (9): A ferrite resin composite material comprising the ferrite powder according to any one of Aspect (1) to (8) and a resin.
Aspect (10): An electromagnetic shielding material, an electronic material or an electronic component, comprising the ferrite resin composite material according to Aspect (9).

Effects of the Invention

The present invention provides a ferrite powder, a ferrite resin composite material, and an electromagnetic shielding material, an electronic material or an electronic component, the ferrite powder being capable of preventing the magnetic loss in high frequency band and preventing the ferrite particles from detaching without impairing formability and filling ability when applied to composite materials or composite products.

BRIEF DESCRIPTION OF THE DRAWINGS

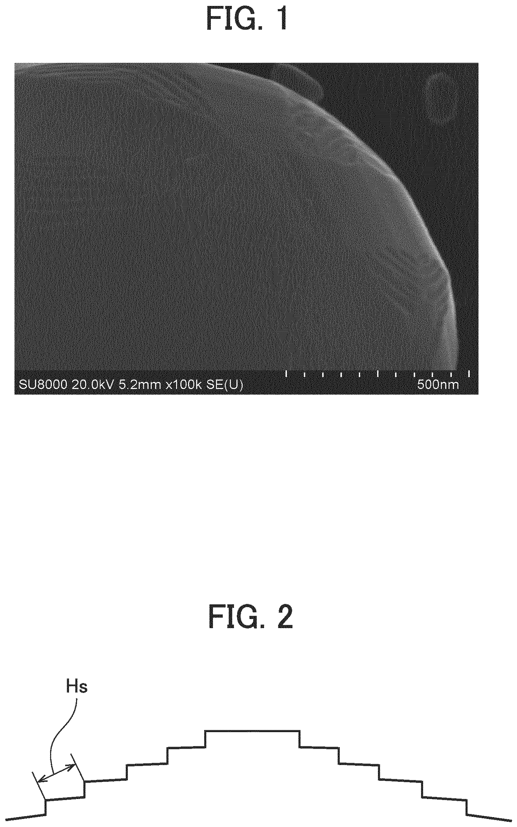

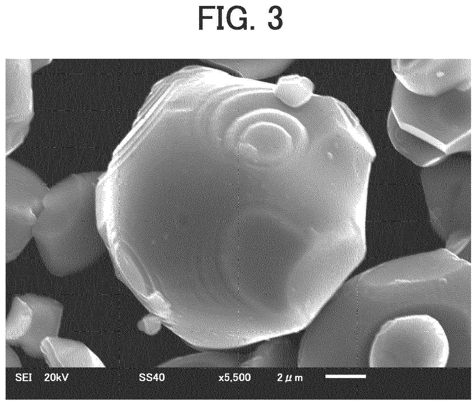

FIG. 1 illustrates a surface SEM image of an example sample (Example 3). FIG. 2 illustrates a schematic cross-sectional view of a stepped feature. FIG. 3 illustrates a surface SEM image of a comparative sample (Example 15).

PREFERRED MODE FOR CARRYING OUT THE INVENTION

Specific embodiments of the present invention (hereinafter referred to as "the present embodiments") will now be described. The present invention should not be limited to the following embodiments, and various modifications can be made without changing the gist of the present invention.

<<1. Ferrite powder>>

The ferrite powder according to the present embodiments is Mn-Zn-based ferrite powder which has a spinel phase as a main phase and contains at least spherical or polyhedral ferrite particles. Such ferrite particles have a stepped feature with convex polygonal contours on the surfaces thereof. The ferrite powder also has a BET specific surface area of 0.35 $m^2$/g to 10.00 $m^2$/g, and a content of a zinc oxide (ZnO) phase is 0% by mass to 0.8% by mass.

The ferrite powder according to the present embodiments is composed of a plurality of ferrite particles. In other words, a plurality of ferrite particles collectively constitutes the ferrite powder. The ferrite particles have a spinel phase as a main phase. The spinel phase is a compound having a stoichiometric composition represented by $MO \cdot Fe_2O_3$ (where M indicates a transition metal element) and has a cubic spinel crystal structure. However, the ferrite powder according to the present embodiments is not limited to one containing a spinel phase having the stoichiometric composition. Deviations from the stoichiometric composition are allowable, as long as the spinel crystal structure can be maintained.

The ferrite powder according to the present embodiments contains at least spherical or polyhedral ferrite particles having a stepped feature (i.e., sphere-like stepped particles). In other words, the ferrite particles constituting the ferrite powder may be partially sphere-like stepped particles or wholly sphere-like stepped particles.

The spherical or polyhedral shape of the particles contained in the ferrite powder can lead to improvements in formability and filling ability of the powder for the following reason: Spherical or polyhedral particles can smoothly avoid friction with other particles during a shaping process. Accordingly, the flowability during the shaping process is improved and the dense filling can be thus achieved. In contrast, particles having an anisotropic or aspherical shape such as a platy or acicular shape are inferior in formability and filling ability.

In the case that the ferrite powder does not contain elements having a high saturated vapor pressure, or the ferrite powder has a composition of, for example, manganese (Mn)-based ferrite, the particles readily have a spherical shape. In contrast, in the case that the ferrite powder contains elements having a high saturated vapor pressure, such as zinc (Zn) and strontium (Sr), the particles readily have a polyhedral shape. This phenomenon is believed to be based on the mechanism where the elements having a high saturated vapor pressure migrate from the inside to the outside of the particles and function as flux, and thereby the particles readily grow into a polyhedron that reflects a crystal structure during a high-temperature heating process (e.g., spraying process) in the production of ferrite powder. Even if the ferrite powder contains elements having a high saturated vapor pressure, adjustment of the amount of the binder resin added during production can lead to spherical particles to be obtained.

The polyhedral particles basically have a shape including a three-dimensional combination of a plurality of polygons. The polygons that constitute a polyhedron typically consist of trigons, tetragons, hexagons, octagons, decagons, or combinations thereof. Examples of such a polyhedron include a truncated oblique cuboctahedron composed of a combination of tetragons, hexagons and octagons. In addition, the polyhedron becomes closer to a sphere as the number of faces increases. Accordingly, the polyhedral particles have a shape of preferably decahedron or more, more preferably dodecahedron or more, and further more preferably tetradecahedron or more. In addition, the polyhedral particles have a shape of typically 100-sided polyhedron or less, more typically 72-sided polyhedron or less, and further more typically 24-sided polyhedron or less.

It should be noted that particles where the ridge lines constituting the polygon are broken at one or more points or the ridge lines are partially curved can also be categorized into polyhedral particles, as long as the overall particle can be recognized as a polyhedron. The polyhedral particles may also include the particles having finely serrated ridge lines constituting polygons. The sphere-like stepped particles may have a stepped feature on the surfaces thereof, and strictly speaking, these particles are not always perfectly spherical or polyhedral. Nevertheless, such a stepped feature is much smaller than the dimensions of the particles; hence, the particles having spherical or polyhedral shape in a macroscopic view are also defined as spherical or polyhedral particles, even if the particles has such a microscopic stepped feature.

The ferrite powder according to the present embodiments includes ferrite particles having a stepped feature (i.e., sphere-like stepped particles). Such stepped feature is described with reference to FIG. 1. FIG. 1 illustrates a surface SEM image of the sphere-like stepped particle in one embodiment among the present embodiments. The drawing demonstrates that the particle surface is not smooth but has a stepped feature. Composite materials or composite products that contain ferrite powder containing particles having such a stepped feature can reduce the detachment of particles due to enhanced adhesion of the particles to the resin. Although the detailed mechanism has not been elucidated, a plausible hypothesis is that the stepped feature present on the particle surface increases the surface area of the particle, that is, the contact area with the resin, resulting in an increase in chemical bonding force between the particles and the resin. It is also speculated that tight fitting of the particles with the resin at step edges in the stepped feature creates the anchor effect of the resin, resulting in an increase in physical bonding force between the particles and the resin.

The stepped feature has convex polygonal contours on the surfaces of the ferrite particles. Namely, the outer shape (or contours) of the stepped feature has a convex polygon in a surface view of the particles. In other words, the stepped feature is provided so as to surround one region of the particle surface with a combination of ridge lines. Such a stepped feature can be provided to more effectively prevent detachment of the particles. A convex polygon indicates a polygon where all interior angles are 180° or less. In other words, a convex polygon can also be a polygon where a line segment connecting any two points located in the inside or on the boundary does not protrude from the polygon. Accordingly, a concave polygon (i.e., non-convex polygon), such as polygon with a star shape, is not contained. The contours of the stepped feature may have any convex polygonal shape. However, the contours are typically trigonal, tetragonal, hexagonal, octagonal and decagonal, reflecting the crystal structure of ferrite. The ferrite particles may also have multiple stepped features on the surfaces thereof. Such multiple stepped features can more effectively prevent detachment of the particles. The number of stepped features included in each ferrite particle is preferably 4 to 50, more preferably 4 to 30.

The number of steps constituting the stepped feature may be one or more. However, a larger number of steps can more effectively contribute to the prevention of detachment of particles. Accordingly, the number of steps is preferably two or more, more preferably four or more. In contrast, a significantly large number of steps may lead to a decrease in the flowability of the ferrite powder. The number of steps is thus preferably 100 or less, more preferably 80 or less. In a stepped feature constructed with multiple steps, the area surrounded by the upper step is one size smaller than the area surrounded by the lower step thereof. In other words, the stepped feature is composed of a laminate of convex polygonal plates that have smaller areas toward the upper steps.

In the case that the stepped feature includes multiple steps, the mean interval (Hs) of the steps is preferably 0.001 um to 0.2 $\mu$m (i.e., 1 nm to 200 nm). The term "mean interval (Hs)" indicates the mean value of the distances between adjacent steps in the stepped feature. This definition will be described in FIG. 4. FIG. 4 illustrates a schematic cross-sectional view of a multiple-stepped feature. As shown in FIG. 4, the multiple-stepped feature has a plurality of step edges, and adjacent step edges are separated by a certain distance. The mean value of the distances between adjacent step edges is defined as the mean interval (Hs) of the steps. The mean interval (Hs) can be determined by observation of the surfaces of ferrite particles with, for example, a scanning electron microscope (SEM). Hs is more preferably 3 nm or more, further more preferably 10 nm or more. In addition, Hs is more preferably 100 nm or less, further more preferably 50 nm or less, particularly more preferably 25 nm or less, most preferably 20 nm or less.

In the case of a volume average particle size (D50) of 2.0 $\mu$m or more, the percentage content (Ps) of the sphere-like stepped particles in the ferrite powder is preferably 3% or more, more preferably 20% or more, further more preferably 50% or more on the basis of the number of particles. A higher Ps leads to higher adhesion to the resin, resulting in more effective prevention of detachment of the particles. Accordingly, a higher Ps is more preferred. However, Ps is typically 90% or less, more typically 80% or less, further more typically 70% or less. Ps can be determined by observation of the ferrite powder with, for example, a scanning electron microscope (SEM). Ps can be adjusted under control of the conditions in the production of the ferrite powder.

In the case of a volume average particle size (D50) of 0.1 um or more and less than 2.0 $\mu$m, the percentage content (Ps) of the sphere-like stepped particles in the ferrite powder is preferably 0.5% or more, more preferably 1% or more, further more preferably 2% or more on the basis of the number of particles. A higher Ps leads to higher adhesion to the resin, resulting in more effective prevention of detachment of the particles. However, the problematic particles readily detachable from the resin have a particle size of 0.3 um or more. The particles within a volume average particle size of 0.1 um or more and less than 2 $\mu$m have a relatively smaller particle size and a larger BET specific surface area.

For this reason, Ps should preferably satisfy 0.5% or more. Ps is typically 95% or less. Ps can be determined by observation of the ferrite powder with, for example, a scanning electron microscope (SEM). Ps can be adjusted under control of the conditions in the production of the ferrite powder.

The percentage content (Ps) of the sphere-like stepped particles in the ferrite powder may be 50% or more, 60% or more, 70% or more, or 80% or more, regardless of volume average particle size (D50).

The ferrite powder according to the present embodiments has a BET specific surface area of 0.35 $m^2$/g to 10.00 $m^2$/g. A BET specific surface area of 10.00 $m^2$/g or less can lead to a reduction in aggregation of the ferrite powder, resulting in superior formability and filling ability. A BET specific surface area exceeding 10.00 $m^2$/g indicates significantly small diameters of the particles constituting the ferrite powder to an extent that may preclude the observation of the stepped feature on the surfaces. Accordingly, the upper limit of the BET specific surface area should be 10.00 $m^2$/g in the present embodiments. In contrast, a BET specific surface area of 0.35 $m^2$/g or more can reduce generation of interstices among particles, resulting in superior filling ability. Furthermore, a BET specific surface area within the above range causes higher adhesion to resin in composite materials or composite products containing such ferrite powder. The BET specific surface area is more preferably 0.50 $m^2$/g or more. The BET specific surface area is also more preferably 7.50 $m^2$/g or less, further more preferably 5.00 $m^2$/g or less, particularly more preferably 2.50 $m^2$/g or less.

The ferrite powder preferably contains ferrite particles having a lattice constant of a spinel phase of 8.350 Å to 8.475 Å. Such a range of the lattice constant can enhance the magnetic properties, in particular the saturation magnetization (σs) of the ferrite powder. For example, particles with smaller particle sizes have larger specific surface areas, leading to a higher reaction rate. Accordingly, such particles with smaller particle sizes readily incorporate elements having a large ionic radius (e.g., Zn) at the stage of particle growth during the synthesis of ferrite powder, resulting in an increase in lattice constant. In contrast, particles with larger particle sizes tend to have a smaller lattice constant. In a conventional process, appropriate adjustment of both the growth rate and reaction rate of particles cannot be readily achieved. In particular, the lattice constant of particles having a larger particle size cannot be readily increased. In the ferrite powder according to the present embodiments, the lattice constant is controlled within an appropriate range to achieve excellent magnetic properties.

The ferrite powder preferably has a shape factor SF-1 of 100 to 110. The term "SF-1" represents an index indicating the sphericity of particles constituting the powder, a shape factor SF-1 of 100 indicates a perfectly spherical shape, and the shape factor SF-1 increases as the discrepancy from the spherical shape increases. A shape factor SF-1 of 110 or less causes the powder to have higher flowability, and superior formability and filling ability, regardless of spherical or polyhedral particles. The shape factor SF-1 is more preferably 105 or less, further more preferably 103 or less.

The ferrite powder preferably has a shape factor SF-2 of 100 to 110. The term "SF-2" represents an index indicating the degree of unevenness on the surfaces of the particles constituting the powder. A shape factor SF-2 of 100 indicates a smooth surface having no unevenness, and the shape factor SF-2 increases as the unevenness (or depth) increases. The ferrite powder according to the present embodiments has a microscopic stepped feature on the surfaces of the particles, and thus exhibits higher adhesion to the resin without detachment of the particles in composite materials or composite products. Accordingly, a moderately higher shape factor SF-2 is more preferred. The shape factor SF-2 is more preferably 101 or more, further more preferably 102 or more. In contrast, a significantly higher shape factor SF-2 results in inferior flowability of the powder, and may thus decrease the formability and filling ability. The shape factor SF-2 is more preferably 105 or less.

The ferrite powder preferably has a 50% diameter in its volumetric particle size distribution (i.e., volumetric average particle size; D50) of 0.10 μm to 20.00 μm. A D50 of 0.10 um or more can reduce the aggregation of the ferrite powder, resulting in superior formability and filling ability. In contrast, a D50 of 20.00 μm or less can reduce generation of interstices among particles, resulting in superior filling ability. The D50 is more preferably 0.50 μm or more, further more preferably 0.60 μm or more, particularly more preferably 0.80 μm or more, most preferably 1.00 um or more. The D50 is also more preferably 10.00 um or less, further more preferably 8.00 um or less, particularly more preferably 6.00 μm or less, most preferably 4.00 μm or less.

In the ferrite powder, the percentage content of particles having a particle size of 0.3 μm or more (P0.3≤) in the measurement of particle size distribution described later is preferably 0.1% by number or more, more preferably 5.0% by number or more, further more preferably 10.0% by number or more, most preferably 20.0% by number or more. Such a percentage content (P0.3≤) can be determined from the data given through conversion of the result of the volumetric distribution of particle sizes into the number distribution.

The ferrite powder has a true density of preferably 5.00 g/cm³ or more, more preferably 5.05 g/cm³ or more, further more preferably 5.10 g/cm³ or more. A higher true density leads to an enhancement in magnetic properties, in particular saturation magnetization (os) and magnetic permeability (μ) of the ferrite powder.

The ferrite powder has a tap density of preferably 0.50 g/cm³ to 3.50 g/cm³, more preferably 1.00 g/cm³ to 3.00 g/cm³. Mixing of particles having a smaller particle size with particles having a larger particle size leads to an increase in tap density, resulting in higher filling ability of the ferrite powder as a whole.

The ferrite powder according to the present embodiments is manganese (Mn)-zinc (Zn)-based ferrite powder.

In other words, it has a composition of manganese (Mn)-zinc (Zn)-based ferrite. The manganese (Mn)-zinc (Zn)-based ferrite mainly contains manganese (Mn), zinc (Zn), iron (Fe) and oxygen (O), and may further contain other elements, such as magnesium (Mg) and/or strontium (Sr). The ferrite may be free of these other elements, and thus may have a composition containing manganese (Mn), zinc (Zn), iron (Fe), oxygen (O), and the balance being incidental impurities. The ferrite powder preferably has a manganese (Mn) content of 3.5% by mass to 20.0% by mass, a zinc (Zn) content of 1.0% by mass to 18.0% by mass, and an iron (Fe) content of 43.0% by mass to 65.0% by mass. Such a composition leads to superior magnetic properties of the ferrite powder and the composite materials or the composite products made from such a powder. The manganese (Mn) content is more preferably 5.0% by mass to 20.0% by mass, further more preferably 7.0% by mass to 20.0% by mass. The zinc (Zn) content is more preferably 1.0% by mass to 16.0% by mass, further more preferably 2.0% by mass to 16.0% by mass. The iron (Fe) content is more preferably 43.0% by mass to 62.5% by mass, further more preferably 45.0% by mass to 62.5% by mass.

Mn-Zn-based ferrite as a composition of the ferrite powder can achieve superior magnetic properties at frequencies lower than 100 MHz compared to those of Mn-based ferrite. For example, the addition of Zn to the Mn-based ferrite with the same content of Mn can improve the magnetic permeability ($\mu$') while keeping the magnetic loss at a low level.

The ferrite powder has a saturation magnetization ($\sigma$s) of preferably 70.0 Am$^2$/kg or more, more preferably 75.0 Am$^2$/kg or more, further more preferably 80.0 Am$^2$/kg or more. The ferrite powder also has a coercivity force (Hc) of preferably 100 Oe or less, more preferably 75 Oe or less, further more preferably 50 Oe or less. An increase in saturation magnetization ($\sigma$s) can result in an increase in magnetic permeability ($\mu$) of the ferrite powder. Accordingly, such an increase in saturation magnetization can impart superior magnetic properties, such as electromagnetic wave shielding properties, to composite materials or composite products containing ferrite powder.

The ferrite powder has a percentage content of a spinel phase of preferably 80.0% by mass or more, more preferably 85.0% by mass or more, further more preferably 90.0% by mass or more, particularly more preferably 95.0% by mass or more, most preferably 99.0 mass % or more. An increase in the percentage content of the spinel phase results in increases in saturation magnetization ($\sigma$s) and magnetic permeability ($\mu$) of the ferrite powder.

The particles constituting the ferrite powder may be composed of either monocrystals or polycrystals. However, the particles are preferably composed of polycrystals. The particles constituting the ferrite powder have a mean crystallite diameter of preferably 1 nm to 100 nm, more preferably 3 nm to 50 nm, further more preferably 5 nm to 20 nm. In addition, the ratio of the mean crystallite diameter to the volume average particle size (D50) (i.e., mean crystallite diameter/D50) is preferably 0.0010 to 0.2000, more preferably 0.0020 to 0.1000, further more preferably 0.0025 to 0.0700.

The ferrite powder according to the present embodiments has a content of zinc oxide (ZnO) phase of 0.0% by mass to 0.8% by mass. In the case that the ferrite powder includes zinc (Zn) as one constituent element, it sometimes contains a free zinc oxide (ZnO) phase. Such a free ZnO phase is a heterogeneous phase that exists separately from the ferrite, unlike Zn constituting the ferrite. A ferrite powder containing a significantly large amount of free ZnO phase may increase the viscosity of a resin composition containing such a ferrite powder. Therefore, a smaller amount of free ZnO phase is preferred. The content of zinc oxide (ZnO) phase in the ferrite powder is further more preferably 0.0% by mass to 0.5% by mass.

As described above, the ferrite powder according to the present embodiments is characterized by containing of ferrite particles with a certain shape having a specific stepped feature on the surfaces thereof. Such a ferrite powder is suitable for applications of electromagnetic shielding materials, electronic materials and/or electronic components. In addition, the ferrite powder, the ferrite resin composite material, the electromagnetic shielding material, the electronic material, or the electronic component according to the present embodiments can prevent the detachment of the ferrite particles without impairing the formability and the filling ability. In contrast, Patent Documents 1 to 5 include no descriptions regarding the surface feature of ferrite particles, and do not target the prevention of the detachment of particles. Furthermore, the carrier core material disclosed in Patent Document 6 has concentric stepped irregularities on the surface thereof, which shape is different from the stepped feature targeted by the present embodiments. The object of Patent Document 6 is to improve the electrically charging properties of the carrier core material (see [0026]), which is irrelevant to the detachment of particles.

«2. Method for producing ferrite powder»

The ferrite powder according to the present embodiments may be produced by any method that satisfies the requirements described above. Most of all, the ferrite powder can be produced by thermal spray of a mixture of ferrite raw materials under predetermined conditions and then rapid cooling of the mixture, as described below.

<Mixing of raw materials>

The ferrite raw materials are compounded to make a raw material mixture. Usable ferrite raw materials are known ferrite raw materials, such as oxides, carbonates, hydroxides, and/or chlorides. The raw materials may be mixed with a known mixer, such as a Henschel mixer, in either a dry state or wet state or in combination of both states.

<Calcination and pulverization>

The resultant raw material mixture is then calcined to yield a calcined product. The calcination may be carried out by any known process. For example, a furnace may be used, such as a rotary kiln, a continuous furnace, or a batch furnace. The calcination may be performed under known conditions. For example, the conditions include holding at 700°C to 1300°C for two hours to 12 hours in an atmosphere such as ambient air.

<Granulation>

The resultant calcined product is pulverized and then granulated to yield a granular product. Any process may be used for the pulverization. For example, a known pulverizer may be used, such as a vibration mill, a ball mill, or a bead mill, and the pulverization may be performed in either a dry state or a wet state, or in combination of both states. The granulation may also be carried out by any known process. For example, water and optional additives, for example a binder such as polyvinyl alcohol (PVA), a dispersant, and/or an antifoaming agent, are added to the pulverized calcined product to adjust the viscosity of the product, and the granulation is then carried out with a granulator such as a spray dryer.

In an ordinary production of ferrite particles, the binder ingredient is generally removed prior to a firing process. Different from the ordinary production, the production method according to the present embodiments preferably includes no debindering process. Thermal spray in a state containing a binder ingredient can effectively form the stepped feature.

As described above, even if the ferrite powder contains a component having a high saturated vapor pressure, spherical particles can be yielded by adjustment of the amount of the binder resin to be added during production. In other words, even with elements having a high saturated vapor pressure, the temperature is controlled in the high-temperature heating process (e.g., during thermal spray) to match the precipitation rate of Fe, which is the main element of ferrite, with the precipitation rate of the element having a high saturated vapor pressure, and thereby a polyhedral fine stepped feature can be formed on the particle surface while maintaining the shape of spherical particle.

<Thermal spray>

The resultant granular product is then thermally sprayed to yield a thermal sprayed product. In the thermal spray, the granular product transported by gas passes through a spray-flame to be melted into ferrite. The ferritized particles are then rapidly cooled and solidified with a cooling gas and recovered in a cyclone or filter separation. The cooling gas may be air at room temperature, or air or an inert gas (e.g., nitrogen gas, helium gas, and argon gas) at a temperature lower than room temperature may be used for rapid cooling and inhibiting of oxidation. The recovered ferrite particles may be classified as needed. In the classification, existing techniques, such as wind classification (airflow classification), mesh filtration, sieve classification and sedimentation, are used to adjust the particle size into a desired size. The particles having a large particle size can be separated and recovered in a single step by airflow classification, such as cyclone separation.

In order to yield ferrite particles having a stepped feature (i.e., sphere-like stepped particles), it is essential that the granular product is thermally sprayed under predetermined conditions. In the thermal spray, the entire granular product is melted and then rapidly cooled. Although the detailed mechanism has not been elucidated, a plausible hypothesis is that a polygonal stepped feature reflecting the crystal structure of ferrite is formed on the particle surface during melting at a high temperature and cooled while such a feature is being maintained by rapid cooling. In contrast, if the granular product were fired at a temperature lower than the melting point to form ferrite particles, a polygonal stepped feature would be barely formed, or would disappear by slow cooling even if such a stepped feature were formed. For example, in Patent Document 6, a carrier core material having stepped irregularities on the particle surface is produced by granulating the raw material mixture and then firing at a temperature of 1000°C or lower (Claim 1 in Patent Document 6). However, such stepped irregularities are concentric, and its shape is different from a stepped feature targeted by the present embodiments.

In the thermal spray, a mixed gas of combustible gas and oxygen can be used as a gas source for combustible flame. The volume ratio of the combustible gas to oxygen is preferably 1:3.5 to 1:6.0, more preferably 1:4.9 to 1:6.0, further more preferably 1:4.9 to 1:5.3. Such a volume ratio allows the volatilized raw material to be condensed, and thereby the formation of particles having small particle size can be appropriately proceeded. For example, preferred conditions in the thermal spray include a flow rate of combustible gas of 7 $Nm^3$/h and a flow rate of oxygen of 35 $Nm^3$/h (i.e., the volume ratio of the combustible gas to oxygen is 1:5).

In the case that an excess amount of combustible gas or oxygen exists during combustion, the gas not used for the combustion may take away the heat during combustion, resulting in a decrease in the flame temperature. The volume of excess combustible gas not used for combustion is preferably 20% or less of the volume of fed combustible gas. In addition, the volume of excess oxygen not used for combustion is preferably 20% or less of the volume of fed oxygen.

The volume of combustible gas to the amount of fed raw material is also critical. Specifically, the rate of net gas volume is preferably 1.1 $Nm^3$/kg to 2.00 $Nm^3$/kg. The rate of net gas volume indicates the rate of the volume of net combustible gas to the amount of fed raw material, and is calculated in accordance with the following expression (1). The volume of net combustible gas indicates the volume of net combustible gas used for combustion, and is calculated in accordance with the following expression (2) or (3).

[Expression 1]

$$\text{Rate of net combustible gas} = \frac{\text{Volume of net combustible gas } (Nm^3/hr)}{\text{Amount of fed raw material } (kg/hr)} \cdots (1)$$

[Expression 2]

$$\text{Volume of net combustible gas} = \frac{\text{Volume of fed oxygen}}{5} \cdots (2)$$

[where (volume of fed combustible gas)×5-(volume of fed oxygen) $\geqq$ 0]
[Expression 3]

$$\text{Volume of net combustible gas} = \text{Volume of fed combustible gas} \cdots (3)$$

[where (volume of fed combustible gas)×5-(volume of fed oxygen) < 0]

Examples of the combustible gas used in the thermal spray include flammable gases, such as propane gas, propylene gas, and acetylene gas, among which particularly preferred is propane gas. In order to transport the granular product into the flammable gas, a transport gas may be used, such as nitrogen, oxygen and air. The flow rate of the granular product to be transported is preferably 20 m/sec to 60 m/sec. The temperature in the thermal spray is preferably 1000°C to 3500°C, more preferably 2000°C to 3500°C.

The amount of raw material to be fed are also critical in the thermal spray. The mechanism of creation of the stepped feature depends on the cooling time from the temperature of the raw material after passing through the flame in thermal spray (the temperature corresponding to the amount of heat transferred to the raw material particles) to room temperature. In particular, the stepped feature is created by rapid cooling of the primary raw material particles after passing through the flame at a high temperature. Even in a flame at the same temperature, as the number of raw-material primary particles per unit time (the amount processed per unit time) increases, the number of the resulting stepped features decreases. From the viewpoint of creating the stepped feature, it is preferred that a smaller amount of raw material should be fed to the thermal spray process. For example, the fed amount is preferably 20 kg/hour or less, more preferably 10 kg/hour or less, most preferably 7 kg/hour or less.

The flow rate of raw material during the thermal spray also influences the shape of the resultant ferrite powder. For example, elements having high vapor pressure, such as zinc (Zn), influences the growth of particles in the thermal spray. In the case that the cooling rate is significantly high for the ferrite particles after passing through the flame in thermal spray, fine particles are likely to be created from nuclei of elements having high vapor pressure, such as zinc (Zn). As a result, ferrite powder having a large BET specific surface area is readily produced. In contrast, in the case that the cooling rate is significantly low, the particles tend to come into contact with each other in the flame in thermal spray to generate agglomerated particles. In addition, particles staying in the flame for long time readily lose the stepped feature. From such a viewpoint, the flow rate of raw material is preferably 20 m/sec to 35 m/sec.

The percentage content (Ps) of sphere-like stepped particles in the ferrite powder can be also adjusted by control of the conditions in the thermal spray. Specifically, a decrease in flow rate of the combustible gas (e.g., propane gas) and a decrease in total oxygen flow rate during the thermal spray lead to a decrease in the temperature of the flame in thermal spray, adjusting Ps. A decrease in the temperature of the flame in thermal spray can shorten the time of rapid cooling of the ferrite particles after passing through the spray-flame. It is speculated that spherical-like stepped particles are less likely to be generated because the particles are cooled before the sufficient formation of stepped feature. It is also believed that partial heating of the raw material particles (i.e., granular product) generates agglomerates where multiple non-spherical particles are bound. Such agglomerates do not have a stepped feature and are further readily disintegrated. If such agglomerates are present in a resin composite, the agglomerates may be disintegrated and detached during processing of the resin composite.

In the ferrite powder according to the present embodiments, containing of elements having a high vapor pressure, such as zinc (Zn), effectively develops the stepped feature, as described above. However, not only the contained elements but also the conditions in the thermal spray are important for the development of the stepped feature. In detail, the stepped feature is likely to be developed if the thermal sprayed product after passing through the flame in thermal spray is cooled from a high temperature at an appropriate rate. In firing which is different from the thermal spray, the cooling rate is relatively low. Accordingly, the periphery of the stepped feature no longer becomes linear as the particles grow at the grain boundaries.

The cooling rate also greatly influences the magnetic properties, in particular the frequency characteristics of magnetic permeability. In other words, particles that are rapidly cooled in the thermal spray have a relatively small grain size. Accordingly, such a small grain size causes the loss factor (i.e., tan $\delta$) to be small at frequencies higher than 10 MHz. In contrast, particles that are slowly cooled in the firing have a large grain size and a large crystallite diameter, which forms the grain, resulting in a large loss factor at high frequencies.

As described above, the control of conditions in the thermal spray can optimize the properties of the ferrite powder. The thermal spray under preferred conditions can condense the volatilized raw material and prompt the formation of particles having relatively small diameter. Moreover, such thermal spray can suitably optimize the shape of the resultant ferrite particles.

<<3. Ferrite resin composite material>>

The ferrite resin composite material according to the present embodiments contains the ferrite powder described above and a resin. The use of such composite material prevents the detachment of the ferrite particles while the formability and the filling ability being kept.

Examples of the resin constituting the composite material include epoxy resin, urethane resin, acrylic resin, silicone resin, polyamide resin, polyimide resin, polyamide-imide resin, fluororesin, or combinations thereof. The silicone resin may be a modified silicone resin modified with, for example, acrylic, urethane, epoxy and/or fluorine groups.

The composite material may include other ingredients, in addition to the ferrite powder and the resin. Examples of such ingredients include solvents, fillers (e.g., organic fillers and inorganic fillers), plasticizers, antioxidants, dispersants, colorants such as pigments, and/or thermally conductive particles.

The proportion of ferrite powder to the total solid content in the composite material is preferably 50% by mass to 95% by mass, more preferably 80% by mass to 95% by mass. The proportion of the resin to the total solid content in the composite material is preferably 5% by mass to 50% by mass, more preferably 5% by mass to 20% by mass. Such a proportion of the ferrite powder and the resin leads to higher dispersion stability of the ferrite powder in the composite material, superior storage stability and formability of the composite material, and higher mechanical strength and electromagnetic wave shielding properties of the resultant composite products (shaped articles) produced with the composite material.

<<4. Electromagnetic shielding material, electronic material and electronic component>>

The electromagnetic shielding material, electronic material, or electronic component according to the present embodiments includes the ferrite resin composite material described above. The electromagnetic shielding material, electronic material, or electronic component may be produced through shaping of the composite material by any known process. Examples of the shaping includes, but not limited to, compression molding, extrusion molding, injection molding, blow molding, and calender molding. A technique of forming a coating film of a composite material on a substrate may also be employed.

EXAMPLES

The present embodiments will now be described in more detail by the following Examples and Comparative Examples. However, the present invention should not be limited to the following Examples.

(1) Preparation of ferrite powder

[Example 1]

<Mixing of raw materials>

Iron oxide ($Fe_2O_3$), trimanganese tetraoxide ($Mn_3O_4$) and zinc oxide (ZnO) as raw materials were weighed to give a molar ratio of $Fe_2O_3$:MnO:ZnO of 53.1:36.7:10.2, and then mixed with a Henschel mixer.

<Calcination and pulverization>

The resultant mixture was calcined in a rotary kiln. The calcination was carried out through holding the mixture in ambient air at 900°C for four hours. The calcined product was coarsely pulverized with a dry bead mill (including 3/16 inch spherical steel beads), and then finely pulverized in the presence of water with a wet bead mill (including 0.65 mm zirconia beads). The pulverized powder had a particle size of 2.53 $\mu$m.

<Granulation>

To the resultant slurry was added polyvinyl alcohol (PVA, 10% aqueous solution) as a binder. The amount of added PVA was 0.024% by mass to the pulverized powder on the basis of solid content. The slurry containing the binder was then granulated with a spray dryer.

<Thermal spray>

The resulting granular product was thermally sprayed in flames of combustible gas and then rapidly cooled. The thermal spray was performed under the following conditions: the flow rate of propane gas was 7.3 $m^3$/hour; the flow rate of total oxygen was 38 $m^3$/hour (oxygen volume for feed of raw material was 4 $m^3$/hour, and oxygen volume for combustion was 34 $m^3$/hour); the feed rate of raw material was 5.5 kg/hour; the air flow was 1100 $m^3$/hour; and the flow rate of raw material was 22.2 m/sec. Cooling air was introduced into the combustible gas immediately after the thermal spray to rapidly cool the product. The product was further recovered with a cyclone separator located downstream of the gas flow to yield a thermal sprayed product. Coarser powder was removed from the thermal sprayed product with a sieve classifier, and finer powder was then removed with another classifier to yield a ferrite powder composed of multiple manganese (Mn)-zinc (Zn)-based ferrite particles.

[Example 2]

The feed rate of raw material was varied to 6.0 kg/hour, and the air flow in the thermal spray to 900 $m^3$/hour. In addition, the rapid cooled product (i.e., the thermal sprayed product) was recovered with a bag filter located downstream of the gas flow. Coarser powder was removed from the thermal sprayed product by airflow classification, but finer powder was not removed. A ferrite powder was prepared as in Example 1 regarding the other parts of the procedure.

[Example 3]

Prior to the mixing, raw materials were weighed to give a molar ratio of $Fe_2O_3$:MnO:ZnO of 66.4:26.7:6.9. A ferrite powder was prepared as in Example 1 regarding the other parts of the procedure. In Example 3, the pulverized powder had a particle size of 2.42 $\mu$m.

[Example 4]

The feed rate of raw material was varied to 6.0 kg/hour and the air flow in the thermal spray to 900 $m^3$/hour. In addition, the rapid cooled product (the thermal sprayed product) was recovered with a bag filter located downstream of the gas flow. Coarser powder was removed from the thermal sprayed product by airflow classification, but finer powder was not removed. A ferrite powder was prepared as in Example 3 regarding the other parts of the procedure.

[Example 5]

Prior to the mixing, raw materials were weighed to give a molar ratio of $Fe_2O_3$:MnO:ZnO of 73.9:20.7:5.4. A ferrite powder was prepared as in Example 1 regarding the other parts of the procedure. In Example 5, the pulverized powder had a particle size of 2.65 $\mu$m.

[Example 6]

The feed rate of raw material was varied to 6.0 kg/hour and the air flow in the thermal spray to 900 $m^3$/hour. In addition, the rapid cooled product (the thermal sprayed product) was recovered with a bag filter located downstream of the gas flow. Coarser powder was removed from the thermal sprayed product by airflow classification, but finer powder was not removed. A ferrite powder was prepared as in Example 5 regarding the other parts of the procedure.

[Example 7]

Prior to the mixing, raw materials were weighed to give a molar ratio of $Fe_2O_3$:MnO:ZnO of 51.7:28.0:20.3. A ferrite powder was prepared as in Example 1 regarding the other parts of the procedure. In Example 7, the pulverized powder had a particle size of 2.61 $\mu$m.

[Example 8]

The feed rate of raw material was varied to 6.0 kg/hour and the air flow in the thermal spray to 900 $m^3$/hour. In addition, the rapid cooled product (the thermal sprayed product) was recovered with a bag filter located downstream of the gas flow. Coarser powder was removed from the thermal sprayed product by airflow classification, but finer powder was not removed. A ferrite powder was prepared as in Example 7 regarding the other parts of the procedure.

[Example 9]

Prior to the mixing, raw materials were weighed to give a molar ratio of $Fe_2O_3$:MnO:ZnO of 51.9:24.1:24.0. A ferrite powder was prepared as in Example 1 regarding the other parts of the procedure. In Example 9, the pulverized powder had a particle size of 2.33 $\mu$m.

[Example 10]

The feed rate of raw material was varied to 6.0 kg/hour and the air flow in the thermal spray to 900 $m^3$/hour. In addition, the rapid cooled product (the thermal sprayed product) was recovered with a bag filter located downstream of the gas flow. Coarser powder was removed from the thermal sprayed product by airflow classification, but finer powder was not removed. A ferrite powder was prepared as in Example 9 regarding the other parts of the procedure.

[Example 11 (comparative)]

The thermal spray was performed under the conditions: the flow rate of propane gas was 5.5 $m^3$/hour; the flow rate of total oxygen was 30.5 $m^3$/hour (oxygen volume for feed of raw material was 3 $m^3$/hour, and oxygen volume for combustion was 27.5 $m^3$/hour); the feed rate of raw material was 5.5 kg/hour; the air flow was 900 $m^3$/hour; and the flow rate of raw material was 17.7 m/sec. A ferrite powder was prepared as in Example 3 regarding the other parts of the procedure.

[Example 12 (comparative)]

<Mixing of raw materials, granulation, and firing>

Prior to the mixing, the raw materials were weighed to give a molar ratio of $Fe_2O_3$:MnO:ZnO of 59.0:30.0:11.0, followed by mixing. The resultant raw material mixture was pulverized with addition of water to prepare a slurry having a solid content of 50% by mass. The slurry was granulated with a spray dryer, subjected to a primary firing, and classified with an air classifier into a granular product having a mean particle size of 25 um. The granular product was subsequently held at 1100°C for four hours in ambient air, and then pulverized with a hammer mill into a fired powder having a mean particle size of 20 $\mu$m.

<Thermal spray>

The resulting fired powder was thermally sprayed in flames of combustible gas and then rapidly cooled. The thermal spray was performed under the conditions: the flow rate of propane gas was 10 $m^3$/hour, a flow rate of total oxygen of 38 $m^3$/hour (oxygen volume for feed of raw material was 3 $m^3$/hour, and oxygen volume for combustion was 35 $m^3$/hour); the feed rate of raw material was 6.0 kg/hour; the air flow was 900 $m^3$/hour; and the flow rate of raw material was 40.0 m/sec. The temperature in the thermal spray (i.e., heating temperature) was 2000°C.

The thermal sprayed product was then transported on a gas stream fed by air supply, and thereby rapidly cooled in ambient air. Since the granular product was thermally sprayed and rapidly cooled in a continuous flow, the resultant particles were mutually separated without connecting to each other. The rapid cooled product was then recovered with a bag filter located downstream of the gas stream. Since particles with a large particle size were fell during the transportation on the gas stream, they were not recovered with the bag filter. The collected (recovered) product (granular product) was classified for removal of coarse powder having a particle size of more than 2,000 nm to produce a ferrite powder. The ferrite powder had a particle size of 2,000 nm or less.

[Example 13 (comparative)]

<Mixing of raw materials>

Iron oxide ($Fe_2O_3$) and trimanganese tetraoxide ($Mn_3O_4$) as raw materials were weighed to give a molar ratio of $Fe_2O_3$:MnO of 79.6:20.4 (Fe:Mn of 7.8:1), and then mixed with a Henschel mixer.

<Calcination and pulverization>

The resultant mixture was calcined with a rotary kiln. The calcination was performed through holding the mixture at 900°C for four hours in ambient air. The resulting calcined product was coarsely pulverized with a dry bead mill (including 3/16 inch spherical steel beads), and then finely pulverized in the presence of water with a wet bead mill (including 0.65 mm zirconia beads). The pulverized powder had a particle size of 2.26 $\mu$m.

<Granulation>

To the resultant slurry was added polyvinyl alcohol (PVA, 10% aqueous solution) as a binder. The amount of added PVA was 0.017% by mass to the pulverized powder on the basis of solid content. The slurry containing the binder was then granulated with a spray dryer.

<Thermal spray>

The resulting granular product was thermally sprayed in flames of combustible gas and then rapidly cooled. The thermal spray was performed under the conditions: the flow rate of propane gas was 7 $m^3$/hour; the flow rate of total oxygen was 38 $m^3$/hour (oxygen volume for feed of raw material was 3.5 $m^3$/hour, and oxygen volume for combustion was 34.5 $m^3$/hour); the feed rate of raw material was 6.5 kg/hour; the air flow was 850 $m^3$/hour; and the flow rate of raw material was 22.5 m/sec. The rapid cooled product (particles) was recovered with a cyclone separator located downstream of the gas stream to yield a thermal sprayed product. Coarser powder was removed from the thermal sprayed product with a sieve classifier, and finer powder was further removed by air classification to produce a ferrite powder composed of multiple manganese (Mn)-based ferrite particles.

[Example 14 (comparative)]

The oxygen volume for feed of raw material was varied to 3.0 $m^3$/hour and the oxygen volume for combustion in the thermal spray to 35.0 $m^3$/hour. In addition, the rapid cooled product (particles) was recovered with a bag filter located downstream of the gas flow to yield a thermal sprayed product. Coarser powder was removed from the thermal sprayed product by airflow classification, but finer powder was not removed. A ferrite powder was prepared as in Example 13 regarding the other parts of the procedure.

[Example 15 (comparative)]

In place of the thermal spray, the granular product was debindered and fired, the resultant fired product was then disintegrated, and coarser powder and finer powder were removed from the disintegrated product by airflow classification. The debindering process was carried out through holding the granular product at 650°C for four hours in ambient air and the subsequent firing process was at 1250°C for four hours in an atmosphere having 0% by volume of oxygen. The disintegration was performed with a hammer crusher. Coarser powder and finer powder were further removed from the thermal sprayed product by airflow classification. A ferrite powder was prepared as in Example 13 regarding the other parts of the procedure.

Table 1 lists the conditions for production of the ferrite powders in Examples 1 to 15.

[Table 1]

Table 1 Conditions for production of ferrite powders

| | Mixing of raw materials | | | Calcination | | Pulverization. Granulation | | Firing | |
|---|---|---|---|---|---|---|---|---|---|
| | Fe2O3 (mol) | MnO (mol) | ZnO (mol) | Temperature (°C) | Atmosphere | Diameter of pulverized Particles (μm) | Amount of added binder (mass%) | Temperature (°C) | Atmosphere |
| Example 1 | 53.1 | 36.7 | 10.2 | 900 | Air | 2.53 | 0.024 | - | - |
| Example 2 | 53.1 | 36.7 | 10.2 | 900 | Air | 2.53 | 0.024 | - | - |
| Example 3 | 66.4 | 26.7 | 6.9 | 900 | Air | 2.42 | 0.024 | - | - |
| Example 4 | 66.4 | 26.7 | 6.9 | 900 | Air | 2.42 | 0.024 | - | - |
| Example 5 | 73.9 | 20.7 | 5.4 | 900 | Air | 2.65 | 0.024 | - | - |
| Example 6 | 73.9 | 20.7 | 5.4 | 900 | Air | 2.65 | 0.024 | - | - |
| Example 7 | 51.7 | 28.0 | 20.3 | 900 | Air | 2.61 | 0.024 | - | - |
| Example 8 | 51.7 | 28.0 | 20.3 | 900 | Air | 2.61 | 0.024 | - | - |
| Example 9 | 51.9 | 24.1 | 24.0 | 900 | Air | 2.33 | 0.024 | - | - |
| Example 10 | 51.9 | 24.1 | 24.0 | 900 | Air | 2.33 | 0.024 | - | - |
| Example 11* | 66.4 | 26.7 | 6.9 | 900 | Air | 2.42 | 0.024 | - | - |
| Example 12* | 59.0 | 30.0 | 11.0 | - | - | - | - | 1100 | Air |
| Example 13* | 79.6 | 20.4 | - | 900 | Air | 2.26 | 0.017 | - | - |

| Table 1 Conditions for production of ferrite powders | | | | | | | | |
| --- | --- | --- | --- | --- | --- | --- | --- | --- |
| | Mixing of raw materials | | | Calcination | | Pulverization. Granulation | | Firing | |
| | Fe2O3 (mol) | MnO (mol) | ZnO (mol) | Temperature (°C) | Atmosphere | Diameter of pulverized Particles (μm) | Amount of added binder (mass%) | Temperature (°C) | Atmosphere |
| Example 14* | 79.6 | 20.4 | - | 900 | Air | 2.26 | 0.017 | - | - |
| Example 15* | 79.6 | 20.4 | - | 900 | Air | 2.26 | 0.017 | 1250 | O$_2$ 0vol% |
| | Thermal spray | | | | | | | Classification | |
| | Flow rate of propane gas (m3/hr) | Flow rate of total oxygen (m3/hr) | Flow rate of oxygen for feed of raw material (m3/hr) | Flow rate of oxygen for combustion (m3/hr) | Feed rate of raw material (kg/hr) | Air flow (m3/hr) | Flow rate of raw material (m/sec) | Coarse powder | Fine powder |
| Example 1 | 7.3 | 38 | 4 | 34 | 5.5 | 1100 | 22.2 | Sieving | Airflow classification |
| Example 2 | 7.3 | 38 | 4 | 34 | 6 | 900 | 22.2 | Airflow classification | - |
| Example 3 | 7.3 | 38 | 4 | 34 | 5.5 | 1100 | 22.2 | Sieving | Airflow classification |
| Example 4 | 7.3 | 38 | 4 | 34 | 6 | 900 | 22.2 | Airflow classification | - |
| Example 5 | 7.3 | 38 | 4 | 34 | 5.5 | 1100 | 22.2 | Sieving | Airflow classification |
| Example 6 | 7.3 | 38 | 4 | 34 | 6 | 900 | 22.2 | Airflow classification | - |
| Example 7 | 7.3 | 38 | 4 | 34 | 5.5 | 1100 | 22.2 | Sieving | Airflow classification |
| Example 8 | 7.3 | 38 | 4 | 34 | 6 | 900 | 22.2 | Airflow classification | - |

| | Thermal spray | | | | | | | Classification | |
|---|---|---|---|---|---|---|---|---|---|
| | Flow rate of propane gas (m3/hr) | Flow rate of total oxygen (m3/hr) | Flow rate of oxygen for feed of raw material (m3/hr) | Flow rate of oxygen for combustion (m3/hr) | Feed rate of raw material (kg/hr) | Air flow (m3/hr) | Flow rate of raw material (m/sec) | Coarse powder | Fine powder |
| Example 9 | 7.3 | 38 | 4 | 34 | 5.5 | 1100 | 22.2 | Sieving | Airflow classification |
| Example 10 | 7.3 | 38 | 4 | 34 | 6 | 900 | 22.2 | Airflow classification | - |
| Example 11* | 5.5 | 30.5 | 3 | 27.5 | 5.5 | 900 | 17.7 | Sieving | Airflow classification |
| Example 12* | 10 | 38 | 3 | 35 | 6 | 900 | 40 | Airflow classification | - |
| Example 13* | 7 | 38 | 3.5 | 34.5 | 6.5 | 850 | 22.5 | Sieving | Airflow classification |
| Example 14* | 7 | 38 | 3 | 35 | 6.5 | 850 | 22.5 | Airflow classification | - |
| Example 15* | - | - | - | - | - | - | - | Airflow classification | Airflow classification |
| Note 1) "*" indicates Comparative Example.<br>Note 2) Flow rate of total oxygen = flow rate of oxygen for feed of raw material + flow rate of oxygen for combustion | | | | | | | | | |

EP 4 317 076 A1

(2) Preparation of composite material

Ferrite resin composite materials were prepared with the ferrite powders yielded in Examples 1 to 15. The composite material was prepared as follows: The ferrite powder and a commercially available epoxy resin were each weighed into a ferrite powder content of 60% by volume, and the mixture was homogenized into a paste in a planetary centrifugal mixer. The viscosity of the paste was measured with a viscometer. The paste was poured into a silicone resin mold and then heat-cured to prepare a sample (composite material) for evaluation of the detachment of particles.

(3) Evaluation

Various properties of the ferrite powders and composite materials prepared in Examples 1 to 15 were evaluated as follows:

<Elemental analysis - contents of metal elements>

The contents of metal elements in the ferrite powder were measured as follows: To 0.2 g of a sample (ferrite powder) was added 60 ml of pure water, 20 ml of 1 N hydrochloric acid, and 20 ml of 1 N nitric acid, and the mixture was heated until the sample was completely dissolved to prepare an aqueous solution. The aqueous solution was placed in an ICP analyzer (Shimadzu Corporation, ICPS-10001V), and the contents of metal elements were measured.

<XRD (ferrite powder)>

The ferrite powder was analyzed by X-ray diffractometry (XRD). The analytical conditions were shown below:
- X-ray diffractometer: X'pertMPD (including high-rate detector) available from PANalytical
- Radiation source: Co-K$\alpha$
- Tube voltage: 45 kV
- Tube current: 40 mA
- Scan rate: 0.002°/sec (continuous scan)
- Scan range (2$\theta$): 15 to 90°

In the resulting X-ray diffraction profile, the integrated intensity ($I_{311}$) for the (311) plane diffraction peak of the spinel phase was determined. Based on the X-ray diffraction profile, the respective percentage contents were determined for the spinel phase and the non-spinel phase.
Furthermore, the X-ray diffraction profile was subjected to Rietveld analysis to estimate the lattice constant of spinel phase, and the crystallite size of spinel phase was then determined in accordance with Scherrer's formula.

<Surface profile of Particles - Ps>

The surface profile of particles in the ferrite powder was evaluated as follows: The ferrite powder was observed with a scanning electron microscope (SEM; Hitachi High-Tech Corporation, SU-8020). In the observation, the magnification was set into 50,000 folds for particles having a mean particle size of 2 $\mu$m or more, and 200,000 folds for particles having a mean particle size of less than 2 um. In each case, the image was took in a field of view that includes 1 to 30 particles, preferably 1 to 10 particles having a horizontal Feret diameter of 0.3 $\mu$m or more.
Imaging was performed in ten fields of view at random, and whether polygonal steps were present was confirmed for particles having a horizontal Feret diameter of 0.3 $\mu$m or more. The proportion of the sphere-like stepped particles (Ps) was then calculated in accordance with Expression (4) below. Particles having a horizontal Feret diameter of less than 0.3 um may preclude observation of the presence of the steps because the electron beams pass through the particles during imaging. Accordingly, these particles were excluded from the target of evaluation.
[Expression 4]

$$Ps(\%) = \frac{\sum_{i=1}^{10} n_i}{\sum_{i=1}^{10} N_i} \cdots (4)$$

In this Expression, $N_i$ is the number of particles having a horizontal Feret diameter of 0.3 $\mu$m or more imaged

in the i-th field of view, and $n_i$ is the number of sphere-like stepped particles among the particles imaged in the i-th field of view. Particles partially outside the field of view were each also counted as one perfect particle.

<Surface profile of Particle - Hs>

In the observation with a scanning electron microscope (SEM), the magnification was set into 200,000 folds, and 1 to 30, preferably 1 to 10 sphere-like stepped particles were imaged such that these particles were located in the center of the field of view. The mean interval (Hs) of the steps was then determined using the scale of SEM image in accordance with the following Expression (5):
[Expression 5]

$$\text{Hs (nm)} = \frac{\text{Total Length of parallel steps in perpendicular direction (nm)}}{\text{Number of steps}} \cdots (5)$$

<Shape factor - in the case of a mean particle size of 2 $\mu$m or more>

For particles having a mean particle size of 2 um or more, the shape factors (SF-1 and SF-2) of the ferrite powder were determined with a particle image analyzer (Malvern Panalytical Ltd., Morphologi G3). The ferrite powder was analyzed with the particle image analyzer. The image analysis was performed for each of 30,000 particles in the powder to automatically determine the circularity, the perimeter, and the circle equivalent diameter (CE Diameter). In the measurement, an objective lens having a magnification of 10 folds was employed, and the particles were dispersed on a slide glass with a jig for dispersion attached to the analyzer under the conditions including a sample volume of 3 mm$^3$ and a dispersion pressure of 5 bar.

The mean circularity, the mean perimeter, and the mean CE diameter were determined by averaging the data given from the particles within $\pm$ 5% of the volume average particle size among all the observed data, and SF-1 and SF-2 were calculated in accordance with the following Expressions (6) and (7):
[Expression 6]

$$\text{SF} - 1 = (\text{Mean circularity})^{-1} \times 100 \cdots (6)$$

[Expression 7]

$$\text{SF} - 2 = \frac{\text{Mean perimeter (Perimeter)}}{\pi \times \text{Mean circle equivalent diameter (CE Diameter)}} \times 100 \cdots (7)$$

<Shape factor - in the case of a mean particle size of less than 2 $\mu$m>

For particles having a mean particle size of less than 2 um, the shape factors (SF-1 and SF-2) of the ferrite powder were determined with a field emission scanning electron microscope (FE-SEM). The ferrite powder was photographed in several fields of view with an FE-SEM. The imaging was performed under the conditions including a magnification of 100,000 folds. The image analysis was then performed with image analysis software (Image-Pro Plus). In the analysis, 100 particles having a circle equivalent diameter within $\pm$ 5% of a volume average particle size were selected and each particle was independently analyzed. The maximum length (horizontal Feret diameter) R (unit: um), the projected peripheral length L (unit: um), the projected area S (unit: $\mu$m2), and the circle equivalent diameter r (unit: um) were measured.

SF-1 and SF-2 for each particle were calculated in accordance with Expression (8) and Expression (9) below, and mean values for all particles were determined to be SF-1 and SF-2 of the ferrite powder.
[Expression 8]

$$\text{SF} - 1 = \frac{R^2}{4\pi S} \times 100 \cdots (8)$$

[Expression 9]

$$SF - 2 = \frac{L}{\pi r} \times 100 \cdots (9)$$

<Proportion of odd-shaped particles>

The proportion of odd-shaped particles in the ferrite powder was determined as follows: In the analysis with a particle image analyzer, the number "N" of particles having a circularity of 0.965 to 1.000 and the number "n" of particles having a circularity of 0.950 or more and less than 0.965 are counted, and the proportion of odd-shaped particles was calculated in accordance with Expression (10) below. Since particles having a circularity of less than 0.950 are aggregated particles, such particles were excluded from the evaluation.
[Expression 10]

$$\text{Proportion of odd} - \text{shaped particles (\%)} = \frac{n}{n + N} \times 100 \cdots (10)$$

<Proportion of aggregated particles>

The proportion of aggregated particles in the ferrite powder was determined as follows: In the analysis with a particle image analyzer, the number "N" of particles having a circularity of 0.900 to 1.000 within $\pm$ 10% of a volume average particle size and the number "n" of particles having a circularity of 0.900 or more and less than 0.950 within $\pm$ 10% of a volume average particle size are counted, and the proportion of aggregated particles was calculated in accordance with Expression (11) below.
[Expression 11]

$$\text{Proportion of aggregated particles (\%)} = \frac{n}{n + N} \times 100 \cdots (11)$$

<Tap density>

The tap density of the ferrite powder was measured with a USP tap density analyzer (Hosokawa Micron Corporation, Powder Tester PT-X) in accordance with JIS Z 2512-2012.

<True density>

The true density of the ferrite powder was measured using a gas replacement method in accordance with JIS Z8807: 2012. Specifically, the measurement was performed with a fully automatic true density analyzer (Mountech Co., Ltd., Macpycno).

<Particle size distribution>

The particle size distribution of the ferrite powder was measured as follows: Into a 100 ml beaker was placed 10 g of a sample (ferrite powder) and 80 ml of water, and two droplets of sodium hexametaphosphate was added as a dispersant. The sample was then dispersed with an ultrasonic homogenizer (SMT Co., Ltd., UH-150). In this process, the output level of the ultrasonic homogenizer was set to 4, and the sample was dispersed for 20 seconds. The bubbles formed on the surface of the beaker were then removed, and the resulting dispersion was introduced into a laser diffraction particle size analyzer (Shimadzu Corporation, SALD-7500nano) for measurement. The conditions for measurement include a pump rate of 7, a built-in ultrasonic irradiation time of 30, and a refractive index of 1.70-050i. The 10% diameter (D10), the 50% diameter (D50; volume average particle size) and the 90% diameter (D90) in the volume distribution of particle sizes were determined through this measurement.
In addition, the resulting volume distribution of particle sizes was converted into the number distribution of particle sizes, and the percentage content of particles having a particle size of 0.3 $\mu$m or more (P0.3$\leq$) was determined in such a number distribution of particle sizes.

<BET specific surface area>

The BET specific surface area of the ferrite powder was measured with a specific surface area analyzer (Mountech Co., Ltd., Macsorb HM model-1208). Approximately 10 g of ferrite powder was placed on medicine wrapping paper and degassed in a vacuum dryer. After the vacuum pressure reaches 0.1 MPa or less, the powder was heated at 200°C for two hours to remove water absorbed on the particle surface. The water-free ferrite powder (about 0.5 to 4 g) was then placed in a standard sample cell dedicated to the analyzer and correctly weighed with a precision balance. The ferrite particles weighed were then placed in the sample port of the analyzer. The measurement was carried out by a one-point method. The atmosphere for measurement includes a temperature of 10 to 30°C and a relative humidity of 20 to 80% (without dewing).

<Magnetic properties - saturation magnetization, residual magnetization, and coercivity>

The magnetic properties (saturation magnetization, residual magnetization, and coercivity) of the ferrite powder were measured as follows: A sample (ferrite powder) was packed in a cell having an inner diameter of 5 mm and a height of 2 mm, and placed in a vibrating sample magnetometer (Toei Industry Co., Ltd., VSM-C7-10A). A magnetic field was applied and swept up to 5 kOe, and the applied magnetic field was then reduced to draw a hysteresis curve. From the data in this curve, the saturation magnetization $\sigma s$, the residual magnetization $\sigma r$, and the coercivity He of the sample were determined.

<Magnetic permeability>

The magnetic permeability of the ferrite powder was measured with an RF impedance/material analyzer (Agilent Technologies, Inc., E4991A) and a magnetic material measuring electrode (16454A). Into a polyethylene container (content capacity: 100 ml) was placed 9 g of a sample (ferrite powder) and 1 g of a binder resin (Kynar301F: polyvinylidene difluoride). The mixture was then stirred with a ball mill under conditions including a rotation rate of 100 rpm. The resultant mixture (about 0.6 g) was transferred into a die (inner diameter: 4.5 mm, outer diameter: 13 mm) and pressed at a pressure of 40 MPa for one minute with a pressing machine to yield a shaped product. The resultant shaped product was heat-cured at 140°C for two hours with a hot air dryer to prepare a sample for measurement. The sample for measurement was placed in the RF impedance/material analyzer, and the outer diameter, inner diameter and height of the sample preliminarily measured were input. In the measurement, the amplitude was set into 100 mV, and the frequency range of 1 MHz to 3 GHz was swept on a logarithmic scale. The real parts ($\mu'$) and the imaginary parts ($\mu''$) of the complex magnetic permeability were determined at frequencies of 10 MHz, 50 MHz and 100 MHz, and the loss factor (tan $\delta$) was calculated in accordance with the following Expression (12):

[Expression 12]

$$\tan\delta \ = \ \frac{\mu''}{\mu'} \ \cdots \ (12)$$

<Viscosity of paste>

The viscosity of the paste containing the ferrite powder and epoxy resin used in the production of the composite material was measured with a B-type viscometer immediately after the paste was prepared.

<Proportion of detached particles>

The proportion of detached particles in the composite material (composite product) was determined as follows: The composite material was polished with a grinder to expose the cross sections of particles. The polished cross sections were observed in multiple fields of view with a field emission scanning electron microscope (FE-SEM), and the numbers of ferrite particles and detached particles exposed on the outermost surface were counted. Since the portions from which the particles were detached are observed in the form of recesses on the polished cross section, the number of recesses was defined as the number of detached particles. The proportion of the detached particles was then calculated in accordance with the following expression (13):

[Expression 13]

Proportion of detached particles (% by number)

$$= \frac{\text{Number of detached particles}}{\text{Number of detached particles} + \text{Number of exposed ferrite particles}}$$

$$\times\, 100 \cdots (13)$$

(4) Results

Tables 2 to 4 show the results of the evaluation in Examples 1 to 15. Surface SEM images of ferrite particles in Examples 3 and 15 are illustrated in FIGS. 1 and 3, respectively.

Table 3 illustrates that the particles contained in the ferrite powders of Examples 1 to 14 produced by the thermal spray exhibit a spherical or polyhedral shape. In Examples 1, 3, 5, 7, 9, 11 and 13 where the coarser powder and finer powder was removed by sieving classification and by air flow classification, the particles had a relatively large volume average particle size D50 (3.24 to 4.22 um) and a spherical shape. In contrast, in Examples 2, 4, 6, 8, 10, 12 and 14 where the coarser powder was removed by airflow classification but the finer powder was not removed, the particles had a relatively small D50 (0.19 to 0.83 $\mu$m) and a polyhedral shape. In addition, Examples 1 to 11 and Examples 13 to 14 evidentially had small shape factors (SF-1 and SF-2; 101 to 104), resulting in superior sphericity. In contrast, Examples 12 and 15 were found to have large shape factors (106 to 110), resulting in inferior sphericity.

Examples 1 to 10 and Examples 12 to 14 had a polygonal stepped feature on the particle surfaces; hence, the proportion of detached particles was as small as 6% by number or less in the composite material. In contrast, Example 11 where the conditions in the thermal spray were changed, causing no stepped feature, had a proportion of detached particles of 12% by number, and Example 15, which was fired in an electric furnace, had a proportion of detached particles of as large as 15% by number. Example 12, which exhibited a large specific surface area, had a small proportion of detached particles. Nevertheless, it had a high paste viscosity (300,000 mPa·s), leading to the difficulties in production of composite materials.

As for the magnetic properties, Example 13, which was a Mn-based ferrite, contained a similar Mn content and had a similar level of BET specific surface area to Example 5 containing Zn, but it exhibited inferior $\mu$' at 10 MHz, 50 MHz and 100 MHz. Similarly, Example 14 had a similar Mn content to Example 6, but it exhibited inferior $\mu$' at 10 MHz, 50 MHz and 100 MHz. Although Example 5 differed in BET specific surface area from Example 14, both Examples exhibited substantially the same $\mu$' at 100 MHz. In contrast, Example 14 exhibited inferior $\mu$' at 10 MHz and 50 MHz. This result was speculated to be based on an increase in $\mu$' at around 100 MHz due to the influence of resonance on the magnetic domain wall. In addition, Examples 1 to 14 had smaller crystallite diameters, resulting in a smaller magnetic loss (tan $\delta$) at 100 MHz. In contrast, Example 15, which was fired in an electric furnace, had a larger crystallite diameter, resulting in a larger tan $\delta$.

[Table 2]

| Table 2 Characteristics of ferrite powders | | | | | | | | | | |
|---|---|---|---|---|---|---|---|---|---|---|
| | Chemical analysis (ICP) | | | XRD | | | | | | |
| | Fe (mass%) | Mn (mass%) | Zn (mass%) | Spinel phase (mass%) | ZnO (mass%) | $Fe_2O_3$ (mass%) | Lattice constant of spinel phase (Å) | Position of peak Note 2 (°) | area intensity of peak Note 2 | FWHM of peak Note 2 (°) | Crystallite diameter (nm) |
| Example 1 | 50.5 | 15.7 | 5.2 | 98.6 | 0.1 | 1.3 | 8.4594 | 41.0811 | 19487 | 0.1475 | 14.48167 |
| Example 2 | 99.3 | 17.3 | 6.5 | 99.4 | 0.1 | 0.6 | 8.4748 | 41.0469 | 26144 | 0.1402 | 15.22778 |
| Example 3 | 56.0 | 12.7 | 3.3 | 97.9 | 0.1 | 2.0 | 8.4539 | 41.1027 | 28035 | 0.1507 | 14.17882 |
| Example 4 | 50.5 | 12.9 | 4.7 | 99.4 | 0.1 | 0.5 | 8.4666 | 41.0667 | 41792 | 0.1196 | 17.85600 |
| Example 5 | 61.6 | 8.0 | 2.4 | 99.9 | 0.1 | 0.0 | 8.4216 | 41.2466 | 21508 | 0.1659 | 12.90806 |
| Example 6 | 58.1 | 8.4 | 3.6 | 97.6 | 0.1 | 2.3 | 8.4179 | 41.299 | 26555 | 0.1778 | 12.05381 |
| Example 7 | 51.0 | 12.5 | 8.7 | 99.3 | 0.1 | 0.6 | 8.4688 | 41.0209 | 31296 | 0.1432 | 14.90288 |
| Example 8 | 45.9 | 12.3 | 13.5 | 99.1 | 0.2 | 0.7 | 8.4688 | 41.0508 | 35882 | 0.1271 | 16.79828 |
| Example 9 | 51.1 | 11.0 | 10.3 | 99.5 | 0.1 | 0.4 | 8.4648 | 41.0333 | 36773 | 0.1314 | 16.24425 |
| Example 10 | 45.7 | 11.1 | 15.3 | 99.3 | 0.2 | 0.5 | 8.4666 | 41.0667 | 41792 | 0.1196 | 17.85600 |
| Example 11* | 56.0 | 12.9 | 3.1 | 96.7 | 0.5 | 2.8 | 8.4560 | 41.0852 | 18750 | 0.1385 | 15.42368 |
| Example 12* | 50.1 | 12.6 | 8.1 | 99.3 | 0.0 | 0.7 | 8.4770 | 40.981 | 22678 | 0.1575 | 13.54159 |

(continued)

| Table 2 Characteristics of ferrite powders | | | | | | | | | | | |
|---|---|---|---|---|---|---|---|---|---|---|---|
| | Chemical analysis (ICP) | | | XRD | | | | | | | |
| | Fe (mass%) | Mn (mass%) | Zn (mass%) | Spinel phase (mass%) | ZnO (mass%) | $Fe_2O_3$ (mass%) | Lattice constant of spinel phase (Å) | Position of peak Note 2 (°) | area intensity of peak Note 2 | FWHM of peak Note 2 (°) | Crystallite diameter (nm) |
| Example 13* | 63.0 | 7.6 | - | 98.4 | - | 1.6 | 8.4473 | 41.1208 | 21733 | 0.1562 | 13.68334 |
| Example 14* | 63.1 | 8.5 | - | 97.1 | - | 2.9 | 8.4023 | 41.3496 | 20346 | 0.1421 | 15.09382 |
| Example 15* | 61.7 | 7.7 | - | 99.6 | - | 0.4 | 8.4383 | 41.1502 | 42529 | 0.0969 | 22.06703 |
| Note 1) "*" indicates Comparative Example. Note 2) Peak indicates (311) plane diffraction peak of spinel phase | | | | | | | | | | | |

[Table 3]

Table 3 Properties of ferrite powders

| | Shape of particles | | | Surface feature of particles | | | Properties of powders | | | | | | | | |
|---|---|---|---|---|---|---|---|---|---|---|---|---|---|---|---|
| | Shape | SF-1 | SF-2 | Stepped feature | Ps (%) | Hs (nm) | Proportion of odd-shaped particles (%) | Proportion of aggregated particles (%) | Tap density (g/cm3) | True density (g/cm3) | D10 (μm) | D50 (μm) | D90 (μm) | P0.3≤ (% by number) | BET (m2/g) |
| Example 1 | Spherical | 101 | 101 | Polygon | 55 | 15 | 5.5 | 0.1 | 3.04 | 5.11 | 1.88 | 4.22 | 9.86 | 100.0 | 0.47 |
| Example 2 | Polyhedral | 101 | 101 | Polygon | 92 | 5 | 12.3 | 0.0 | 1.48 | 5.28 | 0.11 | 0.41 | 1.15 | 19.2 | 4.99 |
| Example 3 | Spherical | 101 | 101 | Polygon | 58 | 12 | 6.2 | 0.1 | 2.77 | 5.19 | 1.73 | 3.53 | 8.52 | 99.6 | 0.57 |
| Example 4 | Polyhedral | 101 | 101 | Polygon | 89 | 5 | 14.4 | 0.0 | 1.06 | 5.42 | 0.11 | 0.42 | 1.29 | 20.0 | 4.87 |
| Example 5 | Spherical | 101 | 101 | Polygon | 62 | 12 | 6.1 | 0.1 | 2.96 | 5.05 | 2.08 | 3.94 | 9.91 | 100.0 | 0.55 |
| Example 6 | Polyhedral | 101 | 101 | Polygon | 87 | 5 | 15.2 | 0.0 | 1.14 | 5.40 | 0.11 | 0.41 | 1.15 | 19.1 | 4.99 |
| Example 7 | Spherical | 101 | 101 | Polygon | 52 | 12 | 5.6 | 0.1 | 2.89 | 5.14 | 1.83 | 3.79 | 9.08 | 99.8 | 0.49 |
| Example 8 | Polyhedral | 101 | 101 | Polygon | 90 | 5 | 13.8 | 0.0 | 1.08 | 5.28 | 0.11 | 0.46 | 1.19 | 28.7 | 3.49 |
| Example 9 | Spherical | 101 | 101 | Polygon | 57 | 10 | 4.3 | 0.1 | 2.90 | 5.19 | 1.66 | 3.24 | 7.70 | 99.5 | 0.52 |
| Example 10 | Polyhedral | 101 | 101 | Polygon | 91 | 5 | 12.9 | 0.0 | 1.23 | 5.48 | 0.11 | 0.48 | 1.21 | 33.1 | 2.98 |
| Example 11* | Spherical | 102 | 104 | None | 8 | 10 | 23.3 | 3.1 | 2.45 | 5.20 | 1.90 | 3.45 | 8.00 | 99.5 | 0.65 |
| Example 12* | Polyhedral | 108 | 110 | Polygon | - | - | 25.2 | 0.0 | 2.76 | 4.93 | 0.11 | 0.19 | 0.59 | 6.4 | 10.10 |
| Example 13* | Spherical | 101 | 101 | Polygon | 45 | 15 | 7.5 | 0.7 | 2.75 | 5.01 | 1.92 | 3.72 | 8.95 | 99.8 | 0.55 |
| Example 14* | Polyhedral | 101 | 103 | Polygon | 24 | 5 | 16.4 | 0.0 | 1.08 | 5.21 | 0.40 | 0.83 | 1.75 | 18.5 | 3.76 |
| Example 15* | Granular | 106 | 106 | Closed contour | 0 | 550 | 20.2 | 7.3 | 2.66 | 5.19 | 7.92 | 11.00 | 16.02 | 100.0 | 0.43 |

Note 1) "*" indicates Comparative Example.
Note 2) Ps and Hs in Example 12 were unmeasurable because of transmission of electron beams during SEM observation.

EP 4 317 076 A1

[Table 4]

Table 4 Properties of ferrite powders and composites

| | Magnetic properties | | | Magnetic permeability (10MHz) | | | Magnetic permeability (50MHz) | | | Magnetic permeability (100MHz) | | | Composite materials | |
| | σs (Am2/kg) | σr (Am2/kg) | He (Oe) | μ' | μ" | tan δ | μ' | μ" | tan δ | μ' | μ" | tan δ | Proportion of detached particles (% by number) | Viscosity (mPa·s) |
|---|---|---|---|---|---|---|---|---|---|---|---|---|---|---|
| Example 1 | 78.1 | 2.1 | 30.1 | 10.05 | 0.12 | 0.01 | 9.93 | 0.13 | 0.01 | 9.29 | 1.69 | 0.18 | <1 | 87000 |
| Example 2 | 73.0 | 3.3 | 43.0 | 10.66 | 0.11 | 0.01 | 10.71 | 0.12 | 0.01 | 10.33 | 1.29 | 0.12 | <1 | 170000 |
| Example 3 | 86.0 | 2.1 | 30.1 | 9.50 | 0.05 | 0.01 | 9.56 | 0.11 | 0.01 | 9.24 | 1.22 | 0.13 | <1 | 90000 |
| Example 4 | 77.9 | 3.7 | 47.4 | 10.04 | 0.06 | 0.01 | 10.21 | 0.13 | 0.01 | 9.53 | 0.80 | 0.08 | <1 | 160000 |
| Example 5 | 87.6 | 2.5 | 35.8 | 8.56 | 0.07 | 0.01 | 8.66 | 0.09 | 0.01 | 8.39 | 0.64 | 0.08 | <1 | 95000 |
| Example 6 | 67.8 | 5.0 | 54.9 | 10.44 | 0.08 | 0.01 | 10.54 | 0.08 | 0.01 | 10.32 | 0.60 | 0.06 | <1 | 230000 |
| Example 7 | 74.1 | 1.8 | 28.7 | 9.08 | 0.09 | 0.01 | 9.16 | 0.14 | 0.02 | 8.71 | 1.54 | 0.18 | <1 | 90000 |
| Example 8 | 56.8 | 2.2 | 34.0 | 8.41 | 0.08 | 0.01 | 8.34 | 0.13 | 0.02 | 6.69 | 1.03 | 0.15 | <1 | 140000 |
| Example 9 | 71.9 | 1.8 | 27.7 | 9.02 | 0.15 | 0.02 | 9.12 | 0.29 | 0.03 | 8.67 | 1.54 | 0.18 | <1 | 88000 |
| Example 10 | 46.4 | 1.5 | 28.4 | 8.66 | 0.16 | 0.02 | 8.51 | 0.22 | 0.03 | 7.89 | 1.08 | 0.14 | <1 | 130000 |
| Example 11* | 83.3 | 2.1 | 30.9 | 7.72 | 0.25 | 0.03 | 7.89 | 0.69 | 0.09 | 9.12 | 1.22 | 0.13 | 12 | 120000 |
| Example 12* | 50.9 | 5.5 | 75.4 | 6.10 | 0.02 | 0.00 | 6.07 | 0.31 | 0.05 | 6.36 | 0.31 | 0.05 | <1 | 300000 |
| Example 13* | 84.7 | 2.9 | 41.7 | 6.55 | 0.03 | 0.00 | 6.62 | 0.04 | 0.01 | 6.88 | 0.35 | 0.05 | 6 | 80000 |

(continued)

| Table 4 Properties of ferrite powders and composites | | | | | | | | | | | | | |
| | Magnetic properties | | | Magnetic permeability (10MHz) | | | Magnetic permeability (50MHz) | | | Magnetic permeability (100MHz) | | | Composite materials | |
| | σs (Am2/kg) | σr (Am2/kg) | He (Oe) | μ' | μ" | tan δ | μ' | μ" | tan δ | μ' | μ" | tan δ | Proportion of detached particles (% by number) | Viscosity (mPa·s) |
| Example 14* | 81.2 | 4.4 | 53.0 | 7.78 | 0.07 | 0.01 | 7.82 | 0.14 | 0.02 | 8.62 | 0.31 | 0.04 | 3 | 155000 |
| Example 15* | 92.9 | 3.9 | 51.0 | 11.77 | 2.22 | 0.19 | 8.32 | 1.77 | 0.21 | 4.56 | 1.88 | 0.41 | 15 | 35000 |
| Note 1) "*" indicates Comparative Example. | | | | | | | | | | | | | | |

**Claims**

1.  A Mn-Zn-based ferrite powder comprising at least spherical or polyhedral ferrite particles having a spinel phase as a main phase,

    wherein the ferrite particles have a stepped feature with convex polygonal contours on the surfaces thereof, the ferrite powder has a BET specific surface area of 0.35 $m^2$/g to 10.00 $m^2$/g, and a content of a zinc oxide (ZnO) phase is 0% by mass to 0.8% by mass.

2.  The ferrite powder according to claim 1, wherein the ferrite powder has a composition of manganese (Mn)-zinc (Zn)-based ferrite with a manganese (Mn) content of 3.5% by mass to 20.0% by mass, a zinc (Zn) content of 1.0% by mass to 18.0% by mass, and an iron (Fe) content of 43.0% by mass to 65.0% by mass.

3.  The ferrite powder according to claim 1 or 2, wherein the stepped feature has two or more steps.

4.  The ferrite powder according to any one of claims 1 to 3, wherein the ferrite powder has a shape factor SF-1 of 100 to 110.

5.  The ferrite powder according to any one of claims 1 to 4, wherein the ferrite powder has sphere-like particles having the stepped feature in a percentage content (Ps) of 50% or more.

6.  The ferrite powder according to any one of claims 1 to 5, wherein the spinel phase has a crystallite diameter of 1 nm to 100 nm.

7.  The ferrite powder according to any one of claims 1 to 6, wherein the spinel phase has a lattice constant of 8.350 Å to 8.475 Å.

8.  The ferrite powder according to any one of claims 1 to 7, wherein the ferrite powder has a 50% diameter (D50) of 0.10 um to 20.00 um in a volume distribution of particle sizes thereof.

9.  A ferrite resin composite material comprising the ferrite powder according to any one of claims 1 to 8 and a resin.

10. An electromagnetic shielding material, an electronic material or an electronic component, comprising the ferrite resin composite material according to claim 9.

EP 4 317 076 A1

## FIG. 1

SU8000 20.0kV 5.2mm x100k SE(U)          500nm

## FIG. 2

28

FIG. 3

## INTERNATIONAL SEARCH REPORT

International application No.

**PCT/JP2022/010101**

### A. CLASSIFICATION OF SUBJECT MATTER

***C01G 49/00***(2006.01)i; ***C08K 3/20***(2006.01)i; ***C08L 101/00***(2006.01)i; ***H01F 1/36***(2006.01)i; ***H01F 1/37***(2006.01)i
FI: C01G49/00 A; C01G49/00 B; H01F1/36; H01F1/37; C08L101/00; C08K3/20

According to International Patent Classification (IPC) or to both national classification and IPC

### B. FIELDS SEARCHED

Minimum documentation searched (classification system followed by classification symbols)

C01G49/00; C08K3/20; C08L101/00; H01F1/36; H01F1/37

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | JP 2015-101509 A (DOWA ELECTRONICS MATERIALS CO., LTD.) 04 June 2015 (2015-06-04)<br>entire text, all drawings | 1-10 |
| A | JP 2015-151287 A (DOWA ELECTRONICS MATERIALS CO., LTD.) 24 August 2015 (2015-08-24)<br>entire text, all drawings | 1-10 |
| A | JP 2017-097252 A (DOWA ELECTRONICS MATERIALS CO., LTD.) 01 June 2017 (2017-06-01)<br>entire text, all drawings | 1-10 |
| A | JP 2015-157727 A (DOWA ELECTRONICS MATERIALS CO., LTD.) 03 September 2015 (2015-09-03)<br>entire text, all drawings | 1-10 |
| A | WO 2019/065923 A1 (POWDERTECH CO., LTD.) 04 April 2019 (2019-04-04)<br>entire text, all drawings | 1-10 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 April 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2022/010101**

### C.    DOCUMENTS CONSIDERED TO BE RELEVANT

| Category* | Citation of document, with indication, where appropriate, of the relevant passages | Relevant to claim No. |
|---|---|---|
| A | JP 2011-170272 A (DOWA ELECTRONICS MATERIALS CO., LTD.) 01 September 2011 (2011-09-01)<br>     entire text, all drawings | 1-10 |
| A | JP 4-154869 A (TODA KOGYO CORP.) 27 May 1992 (1992-05-27)<br>     entire text, all drawings | 1-10 |
| P, X | WO 2021/070871 A1 (POWDERTECH CO., LTD.) 15 April 2021 (2021-04-15)<br>     paragraphs [0024]-[0063], [0070]-[0117], examples, tables 1-3, fig. 1, 2 | 1-10 |

Form PCT/ISA/210 (second sheet) (January 2015)

**INTERNATIONAL SEARCH REPORT**
Information on patent family members

International application No.

**PCT/JP2022/010101**

| Patent document cited in search report | | | Publication date (day/month/year) | Patent family member(s) | | | Publication date (day/month/year) |
|---|---|---|---|---|---|---|---|
| JP | 2015-101509 | A | 04 June 2015 | US | 2016/0266510 | A1 | |
| | | | | entire text, all drawings | | | |
| | | | | WO | 2015/076076 | A1 | |
| | | | | EP | 3075710 | A1 | |
| | | | | KR | 10-2016-0072249 | A | |
| JP | 2015-151287 | A | 24 August 2015 | (Family: none) | | | |
| JP | 2017-097252 | A | 01 June 2017 | (Family: none) | | | |
| JP | 2015-157727 | A | 03 September 2015 | JP | 5769350 | B1 | |
| | | | | entire text, all drawings | | | |
| WO | 2019/065923 | A1 | 04 April 2019 | US | 2020/0251263 | A1 | |
| | | | | entire text, all drawings | | | |
| | | | | EP | 3689825 | A1 | |
| | | | | CN | 111164050 | A | |
| | | | | KR | 10-2020-0064070 | A | |
| JP | 2011-170272 | A | 01 September 2011 | (Family: none) | | | |
| JP | 4-154869 | A | 27 May 1992 | US | 5198138 | A | |
| | | | | entire text, all drawings | | | |
| | | | | EP | 481670 | A2 | |
| WO | 2021/070871 | A1 | 15 April 2021 | (Family: none) | | | |

Form PCT/ISA/210 (patent family annex) (January 2015)

**REFERENCES CITED IN THE DESCRIPTION**

**Patent documents cited in the description**

- WO 2017212997 A
- JP 2016060682 A
- WO 2018061327 A
- JP 2006160560 A
- JP H04304700 A
- JP 5921801 B